# EUROPÄISCHE PATENTSCHRIFT

(11) **EP 2 394 039 B1**
(45) Veröffentlichungstag und Bekanntmachung des Hinweises auf die Patenterteilung: **20.04.2016**
(21) Anmeldenummer: 10703031.4
(22) Anmeldetag: 22.01.2010
(51) Int. Cl.: F02C 7/232, F23K 5/18

(54) **VERFAHREN ZUM SPÜLEN EINES ABSCHNITTS EINES BRENNSTOFFSYSTEMS EINER GASTURBINE**
METHOD FOR PURGING A SECTION OF A FUEL SYSTEM OF A GAS TURBINE
PROCÉDÉ DE PURGE D'UNE SECTION D'UN SYSTÈME DE COMBUSTIBLE D'UNE TURBINE À GAZ

(30) Priorität: 06.02.2009 EP 09001717
(43) Veröffentlichungstag der Anmeldung: 14.12.2011
(73) Patentinhaber: Siemens Aktiengesellschaft, 80333 München (DE)
(72) Erfinder: WAGNER, Ulrich, 51766 Engelskirchen (DE)
(86) Internationale Anmeldenummer: PCT/EP2010/050708
(87) Internationale Veröffentlichungsnummer: WO 2010/089204

(56) Entgegenhaltungen:
- EP-A- 0 939 220
- EP-A- 1 892 471
- EP-A- 1 944 485
- WO-A-01/16472
- JP-A- 1 294 916
- US-A- 4 032 091
- US-A- 5 809 771
- US-A1- 2002 139 399

## Beschreibung

Die Erfindung betrifft ein Verfahren zum Spülen eines Abschnitts eines Brennstoffsystems eines Brenners einer Gasturbine für Flüssigbrennstoff. Ferner betrifft die Erfindung ein Brennstoffsystem eines Brenners einer Gasturbine mit einer Zuführleitung zum Zuführen von Flüssigbrennstoff von einer Brennstoffquelle zu dem Brenner.

Bei Gasturbinen mit Heizöl-Betrieb muss das Heizöl bzw. der flüssige Brennstoff nach dem Betrieb aus den Brennern und den daran angeschlossenen Versorgungsrohrleitungen entfernt werden, um ein Verkoken des Heizöls an deren heißen Oberflächen zu verhindern. Das Verkoken würde Leitungen und Brenner verstopfen und somit unbrauchbar machen. Beim Entfernen des Heizöls, dem so genannten Spülen der Zuführleitung zum Zuführen von Brennstoff, darf kein weiteres Heizöl in die Brennkammer des Brenners gelangen, weil dies zu Verpuffungen und weiteren Schäden führen könnte.

Aus EP 0 939 220 A1 ist ein Verfahren bekannt, bei dem die Brenner und Versorgungsleitungen von Gasturbinen gespült werden, um damit das Heizöl aus den Leitungen bzw. aus dem Brenner zu entfernen. Dazu wird Wasser über eine Wasserleitung einer NOx-Wasserversorgung (welche für den Heizöl/Wasser-Emulsionsbetrieb ohnehin vorhanden ist) in die Heizölleitung und anschließend in die Brennkammer gedrückt. Dadurch werden der Brenner und ein Leitungsstück von Heizöl entleert. In einem zweiten Schritt wird das Wasser der NOx-Wasserversorgung so in die Heizölleitung gedrückt, dass es das in der Heizölleitung befindliche Heizöl rückwärts in Richtung Heizölversorgung (Heizöl-Wassereinspritzpackage) drückt, von wo es über offene Ventile in eine Entleerung verbracht wird. Bei dem derartigen Spülverfahren und dem zugehörigen Brennstoff system kann es bei bestimmten Betriebsbedingungen zum Verbleib von Rückständen in der Heizölleitung kommen.

Ferner ist aus der JP-A-01-294916 ein weiteres Brennstoffleitungssystem für eine Gasturbine bekannt. Zur Verhinderung von Beschädigungen von Ventilbauteilen aufgrund thermischer Dehnungen des Leitungssystems wird verfahrensgemäß von einem Verdichter bereitgestellte Luft zur Brennkammer der Gasturbine über Bypassleitungen geführt. Die Versorgung mit Verdichterluft erfolgt dabei während der Beendigung des Leitungsspülens in der Brennstoffleitung.

Ferner ist aus der EP 1 944 485 A2 eine Kraftstoffförderpumpe bekannt, die durch Drehrichtungsumkehr den in einem zu einem Brenner führenden Leitungsabschnitt vorhandenen Brennstoff absaugen kann.

Weiter ist aus der EP 1 892 471 A1 eine gattungsmäßige Vorrichtung sowie ein Verfahren zum spültechnischen Entfernen von Verkokungen in einem Brenner einer Gasturbine bekannt, wobei der Brenner mittels einer Vorrichtung gespült wird, welche über einen Spülkopf einerseits an den Brenner und andererseits an einer Brennstoffzuleitung angebracht wird. Hierzu ist es jedoch erforderlich, die Gasturbine abzufahren und den Brenner zu öffnen, wobei Brennstoff weitgehend unkontrolliert und ungesichert austreten kann.

Es ist eine Aufgabe der Erfindung ein Verfahren zum Spülen eines Abschnitts eines Brennstoffsystems eines Brenners einer Gasturbine sowie ein zugehöriges Brennstoffsystem zu schaffen, bei dem die oben genannten Nachteile überwunden und insbesondere beim Spülen mit hoher Sicherheit kein weiterer Brennstoff in die Brennkammer des Brenners gelangt.

Die Aufgabe ist gemäß der Erfindung mit einem Verfahren zum Spülen eines Abschnitts eines Brennstoffsystems eines Brenners einer Gasturbine für Flüssigbrennstoff gemäß Anspruch 1 und einem Brennstoffsystem eines Brenners einer Gasturbine gemäß Anspruch 5 gelöst. Vorteilhafte Weiterbildungen der erfindungsgemäßen Lösung sind in den abhängigen Ansprüchen beschrieben.

Gemäß der Erfindung ist ein Verfahren zum Spülen eines Abschnitts eines Brennstoffsystems eines Brenners einer Gasturbine für Flüssigbrennstoff mit folgenden Schritten geschaffen: Vorsehen einer Zuführleitung zum Zuführen von Flüssigbrennstoff von einer Brennstoffquelle zu dem Brenner, Vorsehen eines ersten und eines zweiten Anschlusspunkts an der Zuführleitung, Bereitstellen von einem flüssigen Spülmedium an dem ersten Anschlusspunkt und Erzeugen von Unterdruck an dem zweiten Anschlusspunkt zum Absaugen des sich im Abschnitt zwischen den beiden Anschlusspunkten befindenden Flüssigbrennstoffs durch den zweiten Anschlusspunkt, wobei der erste Auschlusspunkt brennerfern und der zweite Auschlusspunkt brennernah an der Zuführleitung vorgesehen sind und mit dem Absaugen des Flüssigbrennstoffs dieser das Medium am ersten Anschlusspunkt zum Spülen des Abschnitts nachsaugt, und wobei am ersten, brennerfernen Auschlusspunkt ein Multifunktions-Sklerfam vargeseken ist.

Das derartige Verfahren überwindet das eigentliche Problem bekannter Vorgehensweisen, welche nicht sicherstellen können, dass Heizöl beim Spülen in den bzw. die Brenner gedrückt wird. Das Problem wird überwunden, indem der Spüldruck im Brennersystem sicher unterhalb des Umgebungsdrucks und damit auch sicher unterhalb dem in der Brennerkammer eines zugeordneten Brenners vorherrschenden Druck liegt. Dies wird erreicht, indem an der Zuführleitung nahe dem Ablasssystem ein Unterdruck am zweiten Anschlusspunkt erzeugt wird. Der Unterdruck saugt den Flüssigbrennstoff aus dem Leitungsabschnitt heraus. Gleichzeitig saugt der Flüssigbrennstoff ohne Einziehen von Luft das Medium am ersten Anschlusspunkt in die Zuführleitung ein, bis auch dieses nach vollständiger Verdrängung des Flüssigbrennstoffs am zweiten Anschlusspunkt austritt. Dadurch wird der Abschnitt vollständig von Flüssigbrennstoff befreit. Bei diesem Durchspülen der Zuführleitung kann auch jener Flüssigbrennstoff in das Ablasssystem gesogen werden, der sich gegebenenfalls noch im Leitungsabschnitt zwischen der Brennkammer und dem zweiten Anschlusspunkt befindet.

Beim erfindungsgemäßen Verfahren sind der erste Anschlusspunkt brennerfern und der zweite Anschlusspunkt brennernah an der Zuführleitung vorgesehen. Mit diesem Vorgehen wird beim Spülen der Flüssigbrennstoff über den längsten Abschnitt der Zuführleitung in Richtung des Brenners gefördert. Die Zuführleitung wird also in die gleiche Richtung durchspült, wie auch der Flüssigbrennstoff in ihr fließt. Dies hat den Vorteil, dass z.B. konstruktiv vorhandene Stöße und Verbindungsstellen in der Zuführleitung sauberer gespült werden. Selbstverständlich ist auch die Spülung der Zuführleitung in entgegengesetzter Richtung denkbar.

Bei einer ersten, vorteilhaften Weiterbildung des erfindungsgemäßen Verfahrens wird der Unterdruck an dem zweiten Anschlusspunkt mit einer in einer Drainageleitung angeordneten Saug- bzw. Spülpumpe erzeugt. Da entsprechende Drainageleitungen bei bekannten Brennstoffsystemen ohnehin vorhanden sind, muss für diese Weiterbildung lediglich eine Pumpe in eine bestehende Leitung eingesetzt werden. Dies hat nicht nur bei neu zu erstellen Anlagen Kostenvorteile, sondern birgt auch den Vorteil, dass die Lösung selbst bei bestehenden Gasturbinen sehr einfach und kostengünstig integriert werden kann.

Bei einer zweiten, vorteilhaften Weiterbildung des erfindungsgemäßen Verfahrens wird das Medium an dem ersten Anschlusspunkt mit einem Reservoir bereitgestellt, in dem der Druck des Mediums insbesondere auf Umgebungsdruck gehalten wird. Das derartige Reservoir kann kostengünstig nach Art einer Wanne oder eines (offenen) Tanks gestaltet sein und muss insbesondere keinerlei Druckabdichtung aufweisen. Das Reservoir sollte in einer Leitung angeordnet werden, die parallel zu einer Versorgungsleitung eines Wassereinspritzsystems mit darin angeordneter Einspritzpumpe verläuft. Das Reservoir ist dann zu der genannten Einspritzpumpe parallel geschaltet. Es kann so mit einem einfachen Umschaltventil wahlweise der Weg durch die Einspritzpumpe (zum Einspritzen von Medium, insbesondere Wasser, für den Heizöl/Wasser-Emulsionsbetrieb) oder der Weg durch das Reservoir (zum drucklosen Einspeisen von Medium während des Spülvorgangs) eingestellt werden.

Bei einer dritten, vorteilhaften Weiterbildung des erfindungsgemäßen Verfahrens wird aufgrund der oben genannten Vorteile als Medium Wasser verwendet. Wasser ist, wie erwähnt, bei Gasturbinen bereits in der dortigen NOx-Wasserversorgung vorhanden, mittels der im Betrieb der Gasturbine das Wasser in den Brenner eindosiert werden kann, um den Ausstoß von Stickoxiden zu verringern.

Die erfindungsgemäße Lösung sieht ferner ein Brennstoffsystem eines Brenners einer Gasturbine mit
- einer Zuführleitung zum Zuführen von Flüssigbrennstoff von einer Brennstoffquelle zu dem Brenner,
- einem ersten und einem zweiten Anschlusspunkt an der Zuführleitung,
- einem Mittel zum Bereitstellen von einem flüssigen Spülmedium an dem ersten Anschlusspunkt und
- einem Mittel zum Erzeugen von Unterdruck an dem zweiten Anschlusspunkt und zum Absaugen des sich im Abschnitt zwischen den beiden Anschlusspunkten befindenden Flüssigbrennstoffs und des nachgesaugten Spülmediums durch den zweiten Anschlusspunkt vor.

Beim erfindungsgemäßen Brennstoffsystem sind der erste Anschlusspunkt brennerfern und der zweite Anschlusspunkt brennernah an der Zuführleitung vorgesehen, und am esten, brennerfernen Auschlusspunkt ist ein Multifunktions-Stellorgan vorgesehen.

Bei einer ersten, vorteilhaften Weiterbildung des erfindungsgemäßen Brennstoffsystems ist das Mittel zum Erzeugen von Unterdruck an dem zweiten Anschlusspunkt mit einer in einer Drainageleitung angeordneten Spülpumpe gestaltet. Bei einer zweiten, vorteilhaften Weiterbildung des erfindungsgemäßen Brennstoffsystems ist das Mittel zum Bereitstellen von Medium an dem ersten Anschlusspunkt mit einem Reservoir gestaltet, in dem der Druck des Mediums insbesondere auf Umgebungsdruck gehalten ist.

Bei einer dritten, vorteilhaften Weiterbildung des erfindungsgemäßen Brennstoffsystems ist das Medium mit Wasser gebildet.

Bei dem erfindugsgemäßen Brennstoffsystem ist am brennerfernen Anschlusspunkt ein Multifunktions-Stellogan mit folgenden Schaltstellungen vorgesehen:
- Schaltstellung 1: Verbinden der Zufuhr von Medium mit dem brennernahen Anschlusspunkt, Verbinden der Zufuhr von Flüssigbrennstoff mit dem brennerfernen Anschlusspunkt, Verschließen der Drainageleitung (normaler Brennbetrieb);
- Schaltstellung 2: Verbinden der Zufuhr von Medium mit dem brennerfernen Anschlusspunkt und Verbinden des brennernahen Anschlusspunktes mit der Drainageleitung (Spülen mit Unterdruck); und/oder
- Schaltstellung 3: Verschließen der Zufuhr von Medium zum brennernahen Anschlusspunkt, Verschließen der Zufuhr von Medium zum brennerfernen Anschlusspunkt, Verbinden der Zufuhr von Flüssigbrennstoff mit der Drainageleitung (Abführen von Restbrennstoff).

Mit dem Multifunktionsventil kann im normalen Brennbetrieb vorteilhaft Medium über den brennernahen Anschlusspunkt unter Druck eingespeist werden. Ferner können über den brennernahen Anschlusspunkt gegebenenfalls die Düsen am Brenner in dessen Brennkammer hinein gespült werden. Ferner kann (wie oben erläutert) Medium über den brennerfernen Anschlusspunkt drucklos zugeführt und in die Drainage abgesaugt werden. Das derartige Multifunktions-Stellorgan kann als Einheit gefertigt und auch geprüft werden. Ferner ist es innerhalb des Brennstoffsystems mit nur einem Leitungsbündel anzusteuern, insgesamt also besonders kostengünstig. Seine Stellorgane sperren ferner während des normalen Betriebs des Brenners die Brennstoff-Zuführleitung gegenüber der Einspeisung von Fremdmedium ab.

Die erfindungsgemäße Lösung ermöglicht so insgesamt ein einfaches, kostengünstiges und zugleich besonders gut reinigendes Spülen der Zuführleitung für Flüssigbrennstoff an einer Gasturbine.

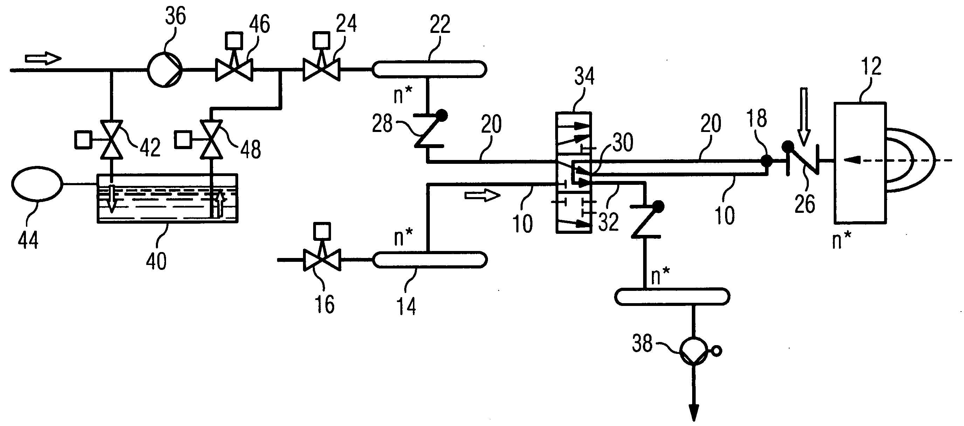

Nachfolgend wird ein Ausführungsbeispiel der erfindungsgemäßen Lösung anhand der beigefügten schematischen Zeichnung näher erläutert. Es zeigt die Figur eine prinzipskizze eines Ausführungsbeispiels eines Brennstoffsystems einer Gasturbine gemäß der Erfindung.

In der Figur ist ein Brennstoffsystem mit einer Zuführleitung 10 zum Zuführen von Flüssigbrennstoff bzw. Heizöl zu einem Brenner 12 dargestellt (wobei Brenner 12 in einer Anzahl n vorhanden sind). Der Flüssigbrennstoff wird dabei in einen Heizöl-Flusssteller 14 mittels eines Stellorgans in Gestallt eines Stellventils 16 eingespeist, von dem aus er in die Zuführleitung 10 gelangt.

Nahe dem Brenner 12 ist in der Zuführleitung 10 ein T-Stück bzw. Anschlusspunkt 18 ausgebildet, an dem ein Medium durch eine Einspeiseleitung 20 in die Zuführleitung 10 eingespeist werden kann. Das Medium ist Wasser, welches aus einem Wasserverteiler 22 einer Nox-Wasserversorgung mit einem in Strömungsrichtung davor angeordneten Stellventil 24 stammt. Dabei ist in der Zuführleitung 10 zwischen dem Anschlusspunkt 18 und dem Brenner 12 ein zum Brenner 12 hin öffnendes Rückschlagventil 26 und in der Einspeiseleitung 20 ein zum Anschlusspunkt 18 hin öffnendes Rückschlagventil 28 vorgesehen.

In Strömungsrichtung aufwärts vom Anschlusspunkt 18 ist in der Zuführleitung 10 ein weiterer Anschlusspunkt 30 angeordnet, an dem in die Zuführleitung 10 Wasser aus dem brennerfernen Abschnitt der Einspeiseleitung 20 eingespeist werden kann. Ferner kann an dem Anschlusspunkt 30 Wasser von dem brennernahen Abschnitt der Einspeiseleitung 20 in eine Drainage- bzw. Abführleitung 32 abgeführt werden. Der Anschlusspunkt 30 ist dabei mit einem Multifunktions-Stellorgan 34 gestaltet, welches dazu zwischen zwei Stellungen umschaltet, insgesamt aber sogar drei Stellungen einnehmen kann.

Beim normalen Betrieb des derartigen Brennstoffsystems einer Gasturbine befindet sich das Multifunktions-Stellorgan 34 in seiner bezogen auf die Figur untersten Stellung, in der es die Einspeiseleitung 20 sowie die Zuführleitung 10 durchgängig herstellt und auf diese Weise dafür sorgt, dass am Brenner 12 sowohl Flüssigbrennstoff als auch Wasser eingespritzt wird. Dabei wird das Wasser aus der Nox-Wasserversorgung mittels einer in Strömungsrichtung hinter dem Stellventil 24 angeordneten Einspritzpumpe 36 über die Einspeiseleitung 20 in den Brenner 12 gedrückt.

Nach dem Abschalten des Brennstoffsystems wird zunächst der Flüssigbrennstoff in die Brennkammer gespült, der sich zwischen dem Anschlusspunkt 18 und dem Brenner 12 befindet. Dies wird durch Zufuhr von Wasser über die Einspeiseleitung 20 erreicht.

Zum Spülen der Leitungen des derartigen Brennstoffsystems einer Gasturbine, d.h. der Zuführleitung 10, schaltet das Multifunktions-Stellorgan 34 in die in der Figur dargestellte Stellung, in der es am Anschlusspunkt 30 den brennerfernen Abschnitt der Einspeiseleitung mit der Zuführleitung 10 verbindet und ferner eine Verbindung zwischen dem brennernahen Abschnitt der Einspeiseleitung 20 und der Drainageleitung 32 herstellt.

Nach dem derartigen Umschalten des Multifunktions-Stellorgans 34 wird mit einer in der Drainageleitung 32 angeordneten Saug- bzw. Spülpumpe 38 Flüssigbrennstoff aus der Drainageleitung 32 abgesaugt und dadurch jener Flüssigbrennotoff nachgesaugt, der sich in dem brennernahen Abschnitt der Zuführleitung 10 befindet. Zugleich wird Wasser aus dem brennerfernen Abschnitt der Einspeiseleitung 20 in diesen Abschnitt der Zuführleitung 10 nachgesaugt. Das Wasser spült dabei die Zuführleitung 10 in derselben Strömungsrichtung, wie zuvor im normalen Betrieb der Flüssigbrennstoff in dieser Leitung geflossen ist.

Damit im brennerfernen Abschnitt der Einspeiseleitung 20 das Wasser stets allenfalls mit Umgebungsdruck nachfließt und nicht etwa von der Einspritzpumpe 36 in die Zuführleitung 10 und dadurch gegebenenfalls sogar in den Brenner 12 gedrückt wird, ist ein sich unter Umgebungsdruck befindendes Reservoir 40 parallel zur Einspritzpumpe 36 geschaltet.

Das zum Spülen vorgesehene Wasser wird also in dem Reservoir 40 unter Umgebungsdruck gehalten. Durch ein Füllventil 42, das über eine Niveaumessung 44 gesteuert wird, wird gewährleistet, dass Wasser aus einem (weiter nicht veranschaulichten) Vorsystem mit einer dortigen Fördereinrichtung in ausreichender Menge im Reservoir 40 bereitsteht. Für den Spülvorgang wird die Einspritzpumpe 36 dann abgestellt, ein in Strömungsrichtung dahinter angeordnetes Stoppventil 46 geschlossen, ein aus dem Reservoir 40 herausführendes Stellventil 48 geöffnet und die Spülpumpe 38 gestartet. Daraufhin fließt das Wasser mit einem niedrigeren als dem Umgebungsdruck vom Reservoir 40 durch das Multifunktions-Stellorgan 34 in die Zuführleitung 10. Das Wasser verdrängt dort das Heizöl bzw. den Flüssigbrennstoff und gelangt in die Drainageleitung 32, ohne dass Flüssigbrennstoff oder Wasser in den Brenner 12 hineindrückt werden könnte.

Die Erfindung erlaubt ein vollständiges Spülen der Zuführleitung(en) 10 in der normalen Heizöl-Strömungsrichtung. Weitere Vorteile sind ein sicheres Entfernen des Heizöls aus den Heizölleitungen auch bei geringem oder fehlendem Brennkammerdruck.

## Patentansprüche

1. Verfahren zum Spülen eines Abschnitts eines Brennstoffsystems eines Brenners einer Gasturbine für Flüssigbrennstoff mit den Schritten:
Vorsehen einer Zuführleitung (10) zum Zuführen von Flüssigbrennstoff von einer Brennstoffquelle zu dem Brenner (12),
Vorsehen eines ersten und eines zweiten Anschlusspunkts (30; 18) an der Zuführleitung (10),
Bereitstellen von einem flüssigen Spülmedium an dem ersten Anschlusspunkt (30) und
Erzeugen von Unterdruck an dem zweiten Anschlusspunkt (18) zum Absaugen des sich im Abschnitt zwischen den beiden Anschlusspunkten (30; 18) befindenden Flüssigbrennstoffs durch den zweiten Anschlusspunkt (18), wobei
der erste Anschlusspunkt (30) brennerfern und der zweite Anschlusspunkt (18) brennernah an der Zuführleitung (10) vorgesehen sind und
mit dem Absaugen des Flüssigbrennstoffs dieser das Medium am ersten Anschlusspunkt (30) zum Spülen des betreffenden Abschnitts zwischen den beiden Anschlusspunkten (30, 18) nachsaugt, **dadurch gekennzeichnet, dass** am ersten, brennerfernen Anschlusspunkt (30) ein MultifunktionsStellorgan (34) vorgesehen ist.

2. Verfahren nach Anspruch 1,
bei dem der Unterdruck an dem zweiten Anschlusspunkt (18) mit einer in einer Drainageleitung (32) angeordneten Spülpumpe (38) erzeugt wird.

3. Verfahren nach einem der Ansprüche 1 bis 2,
bei dem das Spülmedium an dem ersten Anschlusspunkt (30) mit einem Reservoir (40) bereitgestellt wird, in dem der Druck des Medium insbesondere auf Umgebungsdruck gehalten wird.

4. Verfahren nach einem der Ansprüche 1 bis 3,
bei dem als Spülmedium Wasser verwendet wird.

5. Brennstoffsystem eines Brenners einer Gasturbine mit
einer Zuführleitung (10) zum Zuführen von Flüssigbrennstoff von einer Brennstoffquelle zu dem Brenner (12),
einem ersten und einem zweiten Anschlusspunkt (30; 18) an der Zuführleitung (10),
einem Mittel (40) zum Bereitstellen von einem flüssigen Spülmedium an dem ersten Anschlusspunkt (30) und
einem Mittel (38) zum Erzeugen von Unterdruck an dem zweiten Anschlusspunkt (18) und zum Absaugen des sich im Abschnitt zwischen den beiden Anschlusspunkten (30; 18) befindenden Flüssigbrennstoffs und des nachgesaugten Spülmediums durch den zweiten Anschlusspunkt (18), wobei
der erste Anschlusspunkt (30) brennerfern und der zweite Anschlusspunkt (18) brennernah an der Zuführleitung (10) vorgesehen sind, **dadurch gekennzeichnet, dass** am ersten, brennerfernen Anschlusspunkt (30) ein Multifunktions-Stellorgan (34) vorgesehen ist.

6. Brennstoffsystem nach Anspruch 5,
bei dem das Mittel zum Erzeugen von Unterdruck an dem zweiten Anschlusspunkt (18) mit einer in einer Drainageleitung (32) angeordneten Spülpumpe (38) gestaltet ist.

7. Brennstoffsystem nach einem der Ansprüche 5 oder 6,
bei dem das Mittel zum Bereitstellen von Spülmedium an dem ersten Anschlusspunkt (30) mit einem Reservoir (40) gestaltet ist, in dem der Druck des Mediums insbesondere auf Umgebungsdruck gehalten ist.

8. Brennstoffsystem nach einem der Ansprüche 5 bis 7,
bei dem das Spülmedium mit Wasser gebildet ist.

## Claims

1. Method for flushing a section of a fuel system of a burner of a gas turbine for liquid fuel, having the steps:
provision of a supply line (10) for supplying liquid fuel from a fuel source to the burner (12),
provision of a first and a second connection point (30; 18) on the supply line (10),
provision of a liquid flushing medium at the first connection point (30), and
generation of a vacuum at the second connection point (18) for sucking away the liquid fuel contained in the section between the two connection points (30; 18) through the second connection point (18),
the first connection point (30) being provided remotely from the burner and the second connection point (18) near the burner on the supply line (10), and
the liquid fuel being sucked away causes the medium to be sucked in at the first connection point (30) for flushing the respective section between the two connection points (30, 18), **characterized in that** a multifunction actuating member (34) is provided at the first connection point (30) remote from the burner.

2. Method according to Claim 1, in which the vacuum is generated at the second connection point (18) by means of a scavenging pump (38) arranged in a drainage line (32).

3. Method according to either one of Claims 1 and 2, in which the flushing medium is provided at the first connection point (30) by means of a reservoir (40) in which the pressure of the medium is maintained, in particular, at ambient pressure.

4. Method according to one of Claims 1 to 3, in which the flushing medium used is water.

5. Fuel system of a burner of a gas turbine with a supply line (10) for supplying liquid fuel from a fuel source to the burner (12),
with a first and a second connection point (30; 18) on the supply line (10),
with a means (40) for the provision of a liquid flushing medium at the first connection point (30), and
with a means (38) for generating a vacuum at the second connection point (18) and for sucking away the liquid fuel and the sucked-in flushing medium contained in the section between the two connection points (30; 18) through the second connection point (18),
the first connection point (30) being provided remotely from the burner and the second connection point (18) near the burner on the supply line (10), **characterized in that** a multifunction actuating member (34) is provided at the first connection point (30) remote from the burner

6. Fuel system according to Claim 5, in which the means for generating a vacuum at the second connection point (18) is configured with a scavenging pump (38) arranged in a drainage line (32).

7. Fuel system according to either one of Claims 5 and 6, in which the means for the provision of flushing medium at the first connection point (30) is configured with a reservoir (40) in which the pressure of the medium is maintained, in particular, at ambient pressure.

8. Fuel system according to one of Claims 5 to 7, in which the flushing medium is formed by water.

## Revendications

1. Procédé de rinçage d'une section d'un système de combustible d'un brûleur d'une turbine à gaz pour du combustible liquide, comprenant les stades dans lesquels :
on prévoit un conduit (10) d'apport pour apporter du combustible liquide d'une source de combustible au brûleur (12),
on prévoit un premier et un deuxième points (30, 18) de raccordement au conduit (10) d'apport,
on met à disposition un fluide de rinçage liquide au premier point (30) de raccordement et
on produit une dépression au deuxième point (18) de raccordement pour aspirer par le deuxième point (18) de raccordement le combustible liquide se trouvant dans la section entre les deux points (30, 18) de raccordement,
dans lequel
on prévoit le premier point (30) de raccordement sur le conduit (10) d'apport loin du brûleur et le deuxième point (18) de raccordement près du brûleur et
par l'aspiration du combustible liquide, celui-ci aspire à sa suite le fluide au premier point (30) de raccordement pour rincer la section concernée entre les deux points (30, 18) de raccordement, **caractérisé en ce qu'**il est prévu un organe (34) de réglage multifonctionnel au premier point (30) de raccordement loin du brûleur.

2. Procédé suivant la revendication 1,
dans lequel on produit la dépression au deuxième point (18) de raccordement par une pompe (38) de rinçage montée dans un conduit (32) de drainage.

3. Procédé suivant l'une des revendications 1 à 2,
dans lequel on met le fluide de rinçage à disposition au premier point (30) de raccordement par un réservoir (40), dans lequel la pression du fluide est maintenue, notamment à la pression ambiante.

4. Procédé suivant l'une des revendications 1 à 3,
dans lequel on utilise de l'eau comme fluide de rinçage.

5. Système de combustible d'un brûleur d'une turbine à gaz comprenant
un conduit (10) d'apport de combustible liquide d'une source de combustible au brûleur (12),
un premier et un deuxième points (30, 18) de raccordement au conduit (10) d'apport,
un moyen (40) de mise à disposition d'un fluide de rinçage liquide au premier point (30) de raccordement et
un moyen (38) de production d'une dépression au deuxième point (18) de raccordement et d'aspiration du combustible liquide se trouvant dans le tronçon entre les deux points (30, 18) de raccordement et du fluide de rinçage aspiré à la suite par le deuxième point (18) de raccordement,
le premier point (30) de raccordement étant prévu sur le conduit (10) d'apport loin du brûleur et le deuxième point (18) de raccordement près du brûleur, **caractérisé en ce qu'**un organe (34) de réglage multifonction est prévu au premier point (30) de raccordement loin du brûleur.

6. Système de combustible suivant la revendication 5,
dans lequel le moyen de production d'une dépression au deuxième point (18) de raccordement est sous la forme d'une pompe (38) de rinçage montée dans un conduit (32) de drainage.

7. Système de combustible suivant l'une des revendications 5 ou 6,
dans lequel le moyen de mise à disposition de fluide de rinçage au premier point (30) de raccordement est sous la forme d'un réservoir (40) dans lequel la pression du fluide est maintenue, notamment à la pression ambiante.

8. Système de combustible suivant l'une des revendications 5 à 7,
dans lequel le fluide de rinçage est formé par de l'eau.
